# EUROPEAN PATENT APPLICATION

(11) **EP 4 708 769 A1**
(43) Date of publication of application: **11.03.2026**
(21) Application number: 24208426.7
(22) Date of filing: 23.10.2024
(51) Int. Cl.: H04L 9/40, H04L 9/32, H04L 67/02

(54) **WAAP-BASED SECURITY SYSTEM AND METHOD FOR CLIENT API SECURITY**

(30) Priority: 06.09.2024 KR 20240121734
(71) Applicant: Penta Security Inc., Yeongdeungpo-gu, Seoul 07241 (KR)
(72) Inventor: RYU, Ji Hye, Uiwang-si, Gyeonggi-do 16044 (KR); KIM, Min Chul, Seoul 02479 (KR); OH, Jin Hyeok, Gwangmyeong-si, Gyeonggi-do 14247 (KR); YUN, Keon, Seoul 05825 (KR); OH, Yun Jin, Seoul 07519 (KR); PARK, Kwang Geun, Anyang-si, Gyeonggi-do 14049 (KR); KIM, Tae Gyun, Yongin-si, Gyeonggi-do 16811 (KR)
(74) Representative: Zimmermann, Tankred Klaus

(57) **Abstract**

Disclosed is a security method for client application programming interface (API) security that is performed by a security device including a service provider and a hash verification tool. The security method may comprise: registering, by the service provider, the API in the hash verification tool; storing, by the hash verification tool, the API, an identifier (ID) of the API, and a hash; and transmitting, by the hash verification tool, the ID and the hash to the service provider.

## Description

### CROSS-REFERENCE TO RELATED APPLICATIONS

This application claims priority to Korean Patent Application No. 10-2024-0121734, filed on September 6, 2024, with the Korean Intellectual Property Office (KIPO), the entire contents of which are hereby incorporated by reference.

### BACKGROUND

### 1. Technical Field

Example embodiments of the present disclosure relate to a security method and system based on an integrated web security solution such as web application and API protection (WAAP) for client application programming interface (API) security.

### 2. Related Art

Recently, social activity, economic activity, etc., have been actively conducted online such as on the Internet. Therefore, the importance of security is increasing in an application programming interface (API) that is widely used for communication between online terminals.

The API is a set of definitions and protocols for building and integrating application software. Using the API, terminals such as a client and a server may support communication between products or services of the terminals without the need to build a connection infrastructure. For example, in the API communication, a client transmits a key value to a server for accessing data, and when the key value is correct, the server may transmit data to the client.

Meanwhile, as the use of the API expands, hacking and security incidents regarding MyData such as credit information data, personal information such as login information, and public data such as weather, bus information, and medical information are also increasing. For example, security incidents due to API attacks such as obtaining information by compromising user authentication or keys, intentionally allocating large amounts of system resources, or intercepting response data are increasing.

In order to prevent such security incidents, individuals and companies should introduce security solutions for their networks connected to the Internet, etc., but there is a burden in introducing the single function solutions. Therefore, the demand for integrated web security solutions that can comprehensively protect the web environment in consideration of cost issues, etc., is increasing.

In particular, recent integrated web security solutions are evolving into integrated web security solutions with API protection, bot mitigation, and distributed denial of service (DDoS) defense in addition to the existing web application firewall (WAF) function. In this atmosphere, the demand for integrated web security solutions with API security functions that satisfy Open Worldwide Application Security Project (OWASP) API security Top 10 is increasing.

### SUMMARY

Example embodiments of the present disclosure have been derived to meet the needs of the above-described related art, and provide a security method and device for client application programming interface (API) security.

Example embodiments of the present disclosure provide a security method based on an integrated web security solution for client API security.

Example embodiments of the present disclosure provide a web application and API protection (WAAP)-based security device that is a type of integrated web security solution for client API security.

According to a first exemplary embodiment of the present disclosure, a security method for client application programming interface (API) security that is performed by a security device including a service provider and a hash verification tool may comprise: registering, by the service provider, the API in the hash verification tool; storing, by the hash verification tool, the API, an identifier (ID) of the API, and a hash; and transmitting, by the hash verification tool, the ID and the hash to the service provider.

The security method may further comprise: performing, by the service provider, a security handshake for session generation with a user terminal.

The security method may further comprise: receiving, by the service provider, an API request from the user terminal; and transmitting, by the service provider, the API to the user terminal according to the API request.

The security method may further comprise: receiving, by the hash verification tool, a verification request for the API from the user terminal.

The security method may further comprise: comparing, by the hash verification tool, the hash value of the API for which verification is requested with a hash value of a pre-stored API according to the verification request.

The security method may further comprise: transmitting, by the hash verification tool, a result of comparing the hash value of the API for which verification is requested with the hash value of the pre-stored API to the user terminal.

The security method may further comprise: regenerating, by the hash verification tool, a session through another security handshake with the user terminal when the security handshake expires.

According to a second exemplary embodiment of the present disclosure, a security method for client application programming interface (API) security that is performed by a service provider of a security device including a service provider and a hash verification tool may comprise: registering the API in the hash verification tool, the hash verification tool storing the API, an identifier (ID) of the API, and a hash; receiving the ID and the hash from the hash verification tool; performing a security handshake with a user terminal; receiving an API request from the user terminal; and transmitting the API to the user terminal according to the API request.

The API may be transmitted to the hash verification tool when the user terminal requests API verification, and may be used when the API is verified as a safe API or a tampered API based on a hash value of the API stored in the hash verification tool.

According to a third exemplary embodiment of the present disclosure, a security method for client application programming interface (API) security that is performed by a hash verification tool of a security device including a service provider and a hash verification tool may comprise: receiving API registration from a service provider; storing the API, an identifier (ID) of the API, and a hash according to the API registration; transmitting the ID and the hash to the service provider; receiving an API verification request from a user terminal after a security handshake between the hash verification tool and the user terminal is performed, the API for which verification is requested being one received by the user terminal from the service provider; verifying the API; and transmitting the API verification result to the user terminal.

The verifying of the API may include: comparing the hash value of the API for which verification is requested with a hash value of an API pre-stored in the hash verification tool.

The security method may further comprise: performing a security handshake for session regeneration with the user terminal when the security handshake between the service provider and the user terminal expires.

According to a fourth exemplary embodiment of the present disclosure, a security device for client application programming interface (API) security may comprise: a hash verification tool; and a service provider that registers an API in the hash verification tool, wherein the hash verification tool stores the API, an identifier (ID) of the API, and a hash and transmits the ID and the hash to the service provider.

The service provider may perform a security handshake for session generation with a user terminal.

The service provider may receive an API request from the user terminal and transmit the API to the user terminal according to the API request.

The hash verification tool may receive a verification request for an API from the user terminal.

The hash verification tool may compare the hash value of the API for which verification is requested with a hash value of a pre-stored API according to the verification request.

The hash verification tool may transmit a result of comparing the hash value of the API for which verification is requested with the hash value of the pre-stored API to the user terminal.

The hash verification tool may regenerate a session through the security handshake with the user terminal when the security handshake expires.

According to the present disclosure, it is possible to provide the integrated web security solution having the function of protecting the overall web environment. That is, in addition to the web security, it is possible to provide WAAP having additional functions of API protection, bot mitigation, and DDoS defense.

In addition, according to the present disclosure, it is possible to effectively manage not only the API security but also the overall infrastructure and web security services through the WAAP.

In addition, according to the present disclosure, by improving user reliability for a service API providing company, it is possible to block attacks by malicious clients such as hackers in advance. In other words, it is possible to effectively improve user reliability through external announcement of a service API hash value and verification of the service API at a service use stage.

In addition, according to the present disclosure, it is possible to allow users to actively configure a service security environment. In other words, by allowing users to perform a WAAP target service API safety verification query, it is possible for the users to configure their own active user service security environments.

In addition, according to the present disclosure, it is possible to configure a two-way security environment inside and outside a company. In other words, it is possible to provide a two-way security environment that is responsible for service use environment security of users outside a company as well as a security service for a demilitarized zone (DMZ) server inside a service company that receives a client internal network security service.

### BRIEF DESCRIPTION OF DRAWINGS

FIG. 1 is a conceptual diagram for describing enterprise internal network security architecture of a comparative example.
FIG. 2 is a schematic conceptual diagram for describing a web application and API protection (WAAP)-based security device for client API security according to an embodiment of the present disclosure.
FIG. 3 is a flowchart for describing the API and hash value verification process that may be employed in the WAAP-based security architecture of FIG. 2.
FIG. 4 is a schematic block diagram for describing a configuration of the hash verification tool that may be employed in the WAAP-based security architecture of FIG. 2.
FIG. 5 is a schematic block diagram for describing a configuration of the service provider that may be employed in the WAAP-based security architecture of FIG. 2.
FIG. 6 is a schematic block diagram for describing a WAAP-based security device that may be employed in the WAAP-based security architecture of FIG. 2.
FIG. 7 is a schematic block diagram for describing a detailed configuration that may be employed in the WAAP-based security device of FIG. 6.

### DETAILED DESCRIPTION OF THE EMBODIMENTS

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

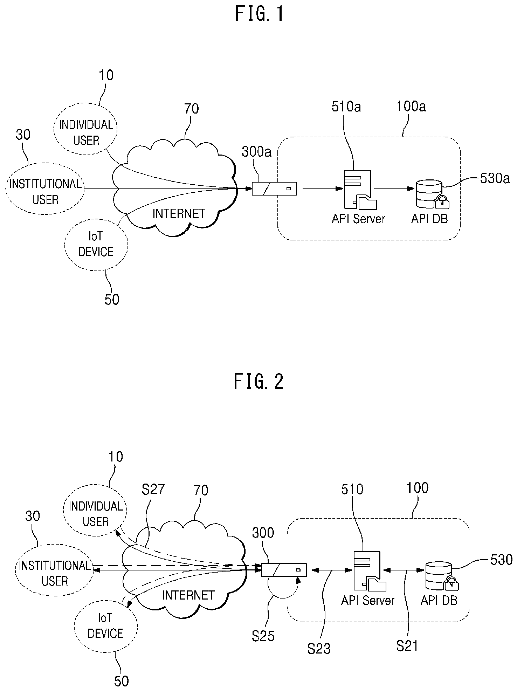

FIG. 1 is a conceptual diagram for describing enterprise internal network security architecture of a comparative example.

Referring to FIG. 1, the enterprise internal network security architecture (hereinafter simply referred to as the "security architecture") of the comparative example performs preconfigured operations for security of the enterprise internal network that includes a gateway 300a, an application programming interface (API) server 510a, and an API database (DB) 530a. The gateway 300a may include a web application firewall.

The gateway 300a of the security architecture is configured to perform API protection in an application including an API. However, a plurality of vulnerabilities against API attacks by attackers have been discovered.

Points where main API attack vulnerabilities occur are as follows.

First, the client 10 may transmit an API key that does not conform to a format to the server 100. In this case, when the server 100 does not perform an appropriate verification process, various problems may occur. In other words, vulnerabilities such as API format ignorance and null character injection may occur. Here, "API format ignorance" refers to a situation where, when the API key is stipulated to conform to a specific format such as a specific length or character combination, the server 100 does not properly verify the specific format, allowing arbitrary data to be registered as the API key. In addition, "null character injection" refers to a situation where the server 100 fails to properly handle null characters during the API verification process, allowing an attacker to transmit a key including null characters and bypass key verification logic.

In addition, the client 10 may have a hard-coded API key. Because the hard-coded encryption key is directly stored in a source code, there is a risk that the hard-coded encryption key will be exposed together with the source code when the source code is leaked, and there is a security weakness in that the hard-coded encryption key is not easily changed in response to a change in the environment. In other words, when the hard-coded encryption key is used in the source code, it is vulnerable to brute-force attacks, and some hash functions that are hard-coded in the form of a constant can be reversely calculated, which may lead to the leakage of encrypted information.

In addition, there are vulnerabilities that may include an API format defect in the server 100. The API format may include an API message format, and as the API message format, UTF-8 encoding in a JavaScript Object Notation (JSON) type may be used. "JSON" may refer to an open standard message format that expresses data objects in the form of a property and a value, that is, key:value, to transmit and receive small-capacity messages. "UTF-8" refers to a standard encoding method that may express all character codes in the world by extending the ASCII code.

Meanwhile, when the server 100 does not properly process the UTF-8 encoding during the API communication, security vulnerabilities may arise due to broken characters. "Broken character vulnerability" refers to a vulnerability in which, when the client 10 transmits data using incorrect UTF-8 encoding and the server 100 does not correctly process the data to cause data corruption, the broken characters may disrupt the system and lead to a buffer overflow attack.

Additionally, during the API call process in which the client 10 transmits the API key value to the server 100 to receive data from the server 100, traffic interception may occur through a man in the middle attack (MITM), address resolution protocol (ARP) spoofing, or domain name system (DNS) spoofing from a disguised server or a disguised client. In other words, the traffic may be intercepted during the API call process in which the client transmits the API key value to the server to receive data from the server.

In order to prevent traffic from being intercepted in the above-described API call process, the encryption key may be encrypted and stored in an external space or file. In addition, it is possible to manage the encryption key using an encryption code generated based on a seed and an initial vector extracted from a random function, for example. As the above-described random function, a random function with enhanced security through the RNGCryptoServiceProvider class of .NET may be used.

However, since the above-described API protection method is performed in the API communication in the web environment, the security vulnerabilities occurring in the web environment may occur similarly to the API vulnerabilities.

For example, the items in the Open Worldwide Application Security Project (OWASP) Web Security Top 10 are listed in Table 1 below.

**[Table 1]**

| No. | OWASP Web Application Security Top 10 (2023) |
|---|---|
| A01 | Broken Access Control |
| A02 | Cryptographic Failures |
| A03 | Injection |
| A04 | Insecure Design |
| A05 | Security Misconfiguration |
| A06 | Vulnerable and Outdated Components |
| A07 | Identification and Authentication Failures |
| A08 | Software and Data Integrity Failures |
| A09 | Security Logging and Monitoring Failures |
| A10 | Server-Side Request Forgery (SSRF) |

In addition, the items of the OWASP API Security Top 10 and their descriptions are shown in Table 2 below.

**[Table 2]**

| No. | OWASP API Security Top 10 (2023) | Security Risk Description |
|---|---|---|
| 1 | Broken Object Level Authorization | When an endpoint that processes object identifiers in an API is exposed, an attack surface for object access control is generated. |
| 2 | Broken Authentication | When an authentication mechanism is improperly implemented, an attacker may intercept authentication tokens or intercept other users' identities. |
| 3 | Broken Object Property Level Authorization | Leads to information exposure or manipulation by unauthorized parties. |
| 4 | Unrestricted Resource Consumption | To process an API request, resources, such as a network bandwidth, a CPU, memory, and storage, are required. In particular, because APIs such as email/short message service (SMS)/phone/biometric verification are charged per request to a service provider, a successful denial of service (DoS) attack may lead to increased operating costs. |
| 5 | Broken Function Level Authorization | Authentication flaws may occur due to other complex access control policies and unclear distinction between management and general functions according to hierarchy, group, and role. |
| 6 | Unrestricted Access to Sensitive Business Flows | APIs with the corresponding vulnerabilities risk exposing business flow, and damage can occur when excessive access occurs in an automated manner. |
| 7 | Server Side Request Forgery (SSRF) | SSRF flaws occur when an API fetches a remote resource without validating a uniform resource identifier (URI) provided by a user. An attacker may transmit a request made for an unexpected target to an application program, even when protected by a firewall or a virtual private network (VPN). |
| 8 | Security Misconfiguration | For a complex configuration supported for use of customized API, various types of attacks may occur when DevOps engineers miss security settings or dc not follow best procedures |
| 9 | Improper Inventory Management | An API inventory is a full list of APIs used across an organization or software, and the APIs are exposed tc more endpoints than a typical web application, sc there is a need to keep the API inventory up to date |
| 10 | Unsafe Consumption of APIs | Since developers trust data received from third-party APIs more than user input, they tend to adopt weaker security standards, and attackers may exploit this tc attack third-party services instead of directly attacking the target API |

In the case where security vulnerabilities occurring in a web environment occur similarly to API vulnerabilities, for example, items A03, A05, and A09 in the OWASP Web Security Top 10 shown in Table 1 are the same as items A07, A08, and A10 in the OWASP API Security Top 10 shown in Table 2, and items A01, A07, and A08 in the OWASP Web Security Top 10 are similar to items A02, A05, and A09 in the OWASP API Security Top 10.

FIG. 2 is a schematic conceptual diagram for describing a web application and API protection (WAAP)-based security device for client API security according to an embodiment of the present disclosure.

Referring to FIG. 2, the WAAP-based security device (hereinafter referred to simply as the "security device") includes WAAP 300, an API server 510, and an API DB 530.

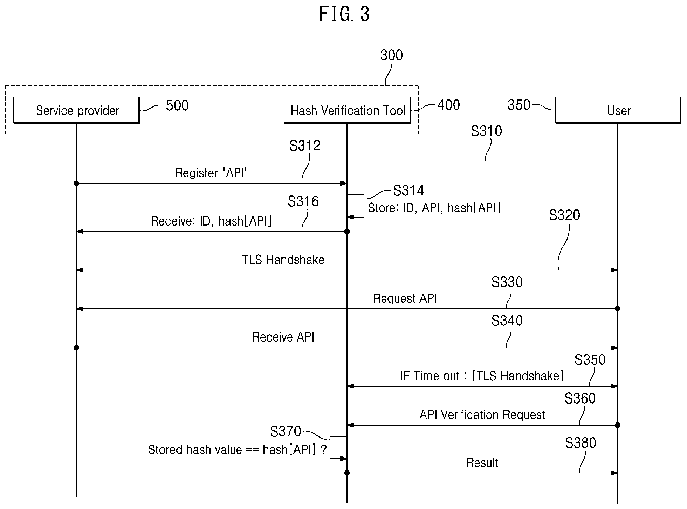

The WAAP 300 is a type of integrated web security solution, and is configured to perform web application security and API security. The WAAP 300 may include a service provider and a hash verification tool. In addition, the WAAP 300 may have functions of a web application firewall (WAF), API security, bot mitigation, and distributed denial of service (DDoS) defense. Since the WAAP 300 is described in detail in the detailed description below referring to FIG. 3, etc., a detailed description thereof is omitted here to avoid duplication.

The API server 510 may be a server in API communication that responds to an API request. The API server 510 may be a service API server of a client private network or an internal network.

The API DB 530 may be an off-chain database (DB) that stores and manages the API. The API DB 530 may be an internal API management database of a client internal network.

The above-described security device may migrate API information from an API server 510 to an API DB 530 for client internal network security and security grade calculation for the API (S21).

In addition, the security device may migrate the API information from the API server 510 to the WAAP 300 (S23).

In addition, the security device may tag an identifier (ID) of the API to at least one API received from the API server 510 in the WAAP 300 and then store an API hash value (S25).

In addition, when service users outside a client request the WAAP 300 of the service providing client (i.e., the service provider) to verify the safety of the API received from the service server (i.e., the API server) of the client, the security device may perform the verification of the safety of the API (S27).

As described above, the security device according to the present embodiment may perform the client internal network security through an API registration and hash value verification process for the client API security. In addition, the security device may calculate the security grade for the API based on the verification result of the API registration and hash value verification process and apply the calculated security grade periodically, thereby maintaining the internal network security of the client more reliably.

In addition, the security device may additionally apply various security processes in addition to the above-described API registration and hash value verification processes. The additional security process may include allowing the integrated web security system to transmit the confirmation message for the request, when the data request is received from, for example, an external client (here, the client is a bot) to check that an abnormal response to the confirmation message is received from a client or a response is received from an abnormal IP address, thereby allowing the client to block the corresponding request.

In addition, the additional security process may include allowing the integrated web security system to detect and block the DoS attack or the DDoS attack at the application layer, such as a plurality of message attacks for which the request is not completed, when the number of messages for which the request is not completed exceeds a certain number within a unit time.

The above-described integrated web security system may be configured to automatically recognize problems occurring during system operation with a self-check function and transmit real-time alarms to the administrator. To this end, the integrated web security system may be configured to self-diagnose a resource status, a network status, and a hardware status, recognize risk situations such as security risks, and transmit an alarm to an administrator or perform an automatic recovery function based on self-diagnosis items and corresponding setting values.

FIG. 3 is a flowchart for describing the API and hash value verification process that may be employed in the WAAP-based security architecture of FIG. 2.

In the present embodiment, the WAAP is the integrated web security solution and may include a service provider 500 and a hash verification tool 400. The user may include at least one of an individual user, an institutional user, an institutional user terminal, and an IoT device. Here, the user may be a user terminal, the individual user may be an individual user terminal, and the institutional user may be an institutional user terminal.

In addition, in the present embodiment, "API" is an abbreviation for "application programming interface," and may refer to a mechanism that allows two software components to communicate with each other using a set of definitions and protocols. In the context of the API, the word "application" refers to any software with unique functions. An interface may be referred to as a service contract between two applications. This contract defines a method of allowing two applications to communicate with each other using requests and responses.

In addition, the API architecture may be basically described in terms of the client and server. In other words, an application that transmits the request may be called the client, and an application that transmits the response may be called the server. For example, an API DB such as a weather database of the Korea Meteorological Administration may be a server, and a user such as a mobile app that requests and receives weather information from the weather database may be a client.

Depending on when and why the API is generated, it may operate in four ways: simple object access protocol API (SOAP API), remote procedure call API (RPC API), Websocket API, and representational state transfer (REST) API.

More specifically, the SOAP API uses a simple object access protocol, in which the client and server are APIs that exchange messages using extensible markup language (XML).

In the RPC API, the API is called a remote procedure call, in which the server operates to transmit an output back to the client when the client completes a function or procedure on the server.

The Websocket API is a web API that uses a JavaScript Object Notation (JSON) object to transmit data, supports two-way communication between the client and the server, and allows the server to transmit a callback message to the connected client.

In addition, the REST API may allow the client to request data from the server, the server may transmit data to the client, and the server may also use the client's input to start an internal function and return output data back to the client. The REST web service is also called a RESTful web service.

Referring to FIG. 3, first, the service provider 500 may register the API in the hash verification tool 400 (S312).

For the API registration, the hash verification tool 400 may store the corresponding API, the ID of the corresponding API, and the hash of the corresponding API according to the API registration operation of the service provider 500 (S314).

Here, the hash is a value that maps data having an arbitrary length to data having a fixed length, and may also be referred to as a hash value. In addition, the hash may be stored as a data structure that provides fast data search by storing a key and a value using a value converted using a hash function as an index.

Next, the hash verification tool 400 may transmit the ID and hash of the API registered in the hash verification tool 400 to the service provider 500 (S316).

Next, the service provider 500 may perform a transport layer security (TLS) handshake with the user 350 (S320). That is, a session for a service may be generated between the service providing system including the service provider 500 and the user 350.

Here, the TLS handshake may be a type of security handshake for generating the session. The session may mean that the service provider 500 views a series of requests coming from the user 350 as a single state and maintains the state consistently. In addition, the session may mean a transmission and reception connection state that assumes interactive information exchange between the service provider 500 and the user 350.

Next, the user 350 may request the API to the service provider 500 through the session (S330). Here, the API includes a service API for the user 350 to use the service of the service provider 500. That is, the service provider 500 may receive an API request signal or an API request message for the service API from the user 350 through the session.

Next, the service provider 500 may transmit the API to the user 350 according to the API request of the user 350 (S340). That is, the user 350 may receive a response message including the service API from the service provider 500.

Meanwhile, when the session between the user 350 and the hash verification tool 400 expires, the user 350 may regenerate the session through another TLS handshake with the hash verification tool 400 (S350).

Then, the user 350 may request API verification from the hash verification tool 400 for the API received from the service provider 500 (S360). That is, the hash verification tool 400 may receive a request message from the user 350 requesting the API verification for the service API that the user 350 received from the service provider 500.

Next, the hash verification tool 400 may check whether the hash value of the service API for which verification is requested by the user 350 matches the hash value of the service API of the service provider 500 pre-stored in the hash verification tool 400 (S370).

Next, the hash verification tool 400 may transmit the verification result for the API verification request by the user 350 to the user 350 (S380). In the verification result, when the API hash value for which verification is requested by user 350 and the API hash value of the service provider stored in the hash verification tool 400 are the same, the corresponding API is a verified secure API. Meanwhile, when the API hash value for which verification is requested by user 350 and the service API hash value of the service provider stored in the hash verification tool 400 are not the same, the corresponding API is an unverified tampered API.

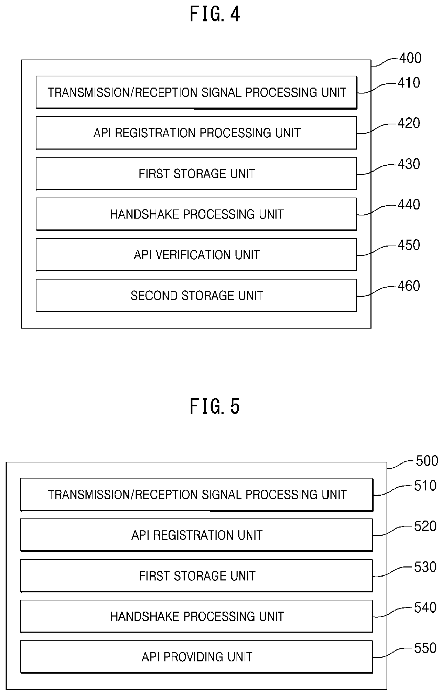

FIG. 4 is a schematic block diagram for describing a configuration of the hash verification tool that may be employed in the WAAP-based security architecture of FIG. 2.

Referring to FIG. 4, the hash verification tool 400 may include a transmission/reception signal processing unit 410, an API registration processing unit 420, a first storage unit 430, a handshake processing unit 440, an API verification unit 450, and a second storage unit 460.

The transmission/reception signal processing unit 410 processes transmission/reception of a signal, a message, and data to/from the service provider. In addition, the transmission/reception signal processing unit 410 processes the transmission/reception of the signal, message, and data to/from the user provider. In addition, the transmission/reception signal processing unit 410 may receive signals or messages regarding API registration from the service provider. In addition, the transmission/reception signal processing unit 410 may transmit/receive the signal for the TLS handshake to/from the user. In addition, the transmission/reception signal processing unit 410 may receive an API verification request message from the user. In addition, the transmission/reception signal processing unit 410 may transmit a response message including the result of the API verification request to the user.

The API registration processing unit 420 may generate the ID and hash of the corresponding API according to the API registration operation of the service provider, and store the ID and hash of the corresponding API together with the corresponding API in a first storage unit 430. The first storage unit 430 may store the API, the ID of the API, and the hash (hash[API]) of the API.

The handshake processing unit 440 may process the transmission/reception signal for the TLS handshake with the user to regenerate the session when the session with the user expires. The expired session may be included in the session generated by the user with the service provider, and the regenerated session may be performed based on the information used in the session generated with the service provider.

The API verification unit 450 may be configured to verify the API for which the verification is requested when there is an API verification request from the user. The API verification unit 450 may verify whether the corresponding API is a verified secure API or an unverified tampered API by comparing the hash value of the pre-stored API with the hash value of the API for which the verification is requested.

The second storage unit 460 may store the verification result of the API verification unit 450. The second storage unit 460 may be formed integrally with the first storage unit 430, but is not limited thereto, and may be a separate storage unit.

FIG. 5 is a schematic block diagram for describing a configuration of the service provider that may be employed in the WAAP-based security architecture of FIG. 2.

Referring to FIG. 5, a service provider 500 may include a transmission/reception signal processing unit 510, an API registration unit 520, a first storage unit 530, a handshake processing unit 540, and an API providing unit 550.

The transmission/reception signal processing unit 510 processes transmission/reception of a signal, a message, and data to/from the hash verification tool. In addition, the transmission/reception signal processing unit 510 processes the transmission/reception of the signal, message, and data to/from the user provider. The transmission/reception signal processing unit 510 may transmit a signal or message related to the API registration to the hash verification tool. In addition, the transmission/reception signal processing unit 510 may transmit /receive the signal for the TLS handshake to/from the user. In addition, the transmission/reception signal processing unit 510 may receive an API request message from the user and transmit a response message containing the API to the user.

The API registration unit 520 may transmit a signal or message for registering its own API in the hash verification tool to the verification tool.

When the API is registered and stored in the hash verification tool according to the API registration operation by the API registration unit 520, and then the ID and hash of the API are received by the service provider 500 from the hash verification tool, the first storage unit 530 may store the API, ID, and hash transmitted through the transmission/reception signal processing unit 510 or the API registration unit 520 within the service provider 500.

The handshake processing unit 540 may process a handshake signal or message when the service provider with an API registered in the hash verification tool performs a handshake for session generation according to a connection request for service use from a user. The handshake may include the TLS handshake, but is not limited thereto, and other security measures may be applied.

The API providing unit 550 may provide the API to the user according to the command of the processor of the service provider 500 when an API request is received from the user after a session for a service is generated between the user and the service provider.

According to the security method of the present embodiment described above, the WAF function of the WAAP may be provided for enterprise internal network security. The WAF function may include DMZ zone service server security, bot detection, DDoS blocking, etc.

In addition, according to the security method of the present embodiment, a WAAP service API security grade calculation function that performs the safety grade calculation for vulnerabilities of each service API may be provided for enterprise service API security. In addition, a WAAP service API management function that generates the IDs and hash values for each service API and then matches the IDs and hash values or matches the hash values may be provided for the enterprise service API security.

In addition, according to the security method of the present embodiment, a WAAP service API safety verification function that performs verification for a user request for safety check of the service API may be provided for the enterprise service API security. A prerequisite for the service API safety verification function may include that the service API is served as a standardized API to which consistent rules, patterns, and protocol standards are applied.

In addition, according to the security method of the present embodiment, a user-active reverse WAAP function requesting a security verification of a service API from a WAAP of a service providing company (corresponding to a service provider) may be provided for external enterprise user security.

In addition, according to the security method of the present embodiment, for the external enterprise user security, for example, a preemptive API vulnerability damage blocking function may be provided for announcing the hash value of the service API to the outside to prevent the forgery of the service API.

In addition, according to the security method of the present embodiment, for the external enterprise user security, for example, a secure user service usage environment providing function may be provided for providing a secure service API through a verification procedure of a service API.

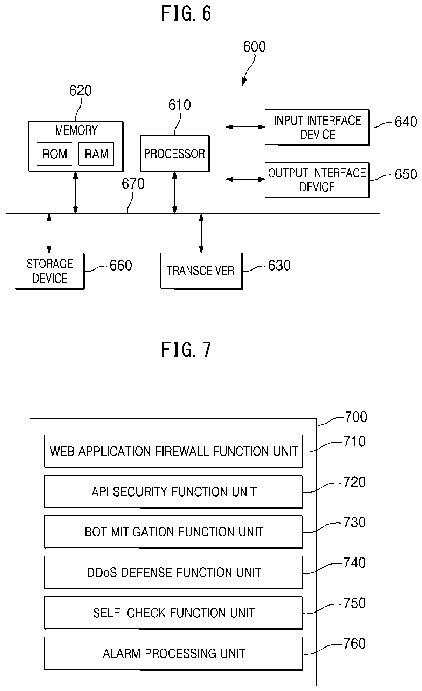

FIG. 6 is a schematic block diagram for describing a WAAP-based security device that may be employed in the WAAP-based security architecture of FIG. 2. FIG. 7 is a schematic block diagram for describing a detailed configuration that may be employed in the WAAP-based security device of FIG. 6.

Referring to FIG. 6, the WAAP-based security device, that is, a security device 600, may include at least one processor 610, a memory 620, and a transceiver 630) that is connected to a network and performs communication. The at least one processor 610 and memory 620 may be configured as at least one controller. The transceiver 630 may include a sub-communication system supporting a wired network or a wireless communication module (WCM) supporting a wireless network.

In addition, a security device 600 may further include an input interface device 640, an output interface device 650, a storage device 660, etc. In addition, the components included in the security device 600 may communicate with each other by being connected by a bus 670.

However, each component included in the security device 600 for providing differential security services may be connected through an individual interface or individual bus centered on the processor 610, rather than a common bus. For example, the processor 610 may be connected to at least one of the memory 620, the transceiver 630, the input interface device 640, the output interface device 650, and the storage device 660 through a dedicated interface.

The processor 610 may execute program commands stored in at least one of the memory 620 and the storage device 660. The processor 610 may be a central processing unit (CPU), a graphics processing unit (GPU), or a dedicated processor on which the security method according to the embodiments of the present disclosure is performed.

The processor 610 may include at least one software module 700, as illustrated in FIG. 7, for example, and the at least one software module 700 may include a WAF function unit 710, an API security function unit 720, a bot mitigation function unit 730, a DDoS defense function unit 740, a self-check function unit 750, and an alarm processing unit 760.

The WAF function unit 710 may be configured to respond to web attacks or respond to primary attacks for the purpose of collecting information for secondary attacks, as at least a part of the WAF function of the WAAP. The WAF function unit 710 may include a WAF engine based on a plurality of rules and a custom rule function. The WAF engine may detect and block HTTP/HTTPS-based web attacks through logic analysis of signals or data of attackers or bypass attackers, thereby maintaining client internal network security.

The API security function unit 720 is at least a part of the WAF function of the WAAP or the enterprise service API security function, and may calculate the security grade for the API, and check whether the API is safe or tampered through the API verification and guide a user.

The bot mitigation function unit 730 is at least a part of the WAF function of the WAAP or the enterprise service API security function, and may be configured to identify and detect bot fraud and block the bot fraud. The bot mitigation function unit 730 may identify the bot fraud and block the attack attempt by using the unique information of the client (in this case, the attacker) through a preset suspicious access (SA) rule. Here, the SA rule may be used to determine characteristics of an automated attack tool such as a bot and block or restrict access of a client that is not a normal web browser.

The DDoS defense function unit 740 is at least part of the WAF function of the WAAP, and may be configured to detect and block the DDoS attacks at the application layer. The DDoS defense function unit 740 may detect and block attacks that repeatedly transmit uncompleted requests and overload the session, for example.

The self-check function unit 750 may be configured to automatically recognize problems that may occur during the operation of the security device. The self-check function unit 750 may be configured to perform real-time self-state self-diagnosis, recognition of a risk situation, an automatic recovery function operation, etc., according to the preset process. The automatic recovery function may be performed by preset self-diagnosis items and corresponding setting values.

The alarm processing unit 760 may transmit an alarm to the administrator or client of the security device according to the preset risk level classification result for the self-diagnosis, the recognition of a risky situation, etc., and/or the value setting for alarm generation, when there is a usage setting for the alarm.

At least one of the software modules described above, or at least one of the WAF function unit 710, the API security function unit 720, the bot mitigation function unit 730, the DDoS defense function unit 740, the self-check function unit 750, and the alarm processing unit 760 may be configured with a program command.

In addition, the program command may include at least one command for implementing the security method. For example, the program command may include a command to register the API in the hash verification tool, a command to store the API and the identifier and hash of the API, a command to transmit the identifier and hash to the service provider, a command to perform the TLS handshake with the user, a command to provide the API to the user, a command to compare the hash value of the service API for which verification is requested with the hash value of the pre-stored service API when requesting the API verification, a command to transmit the verification result to the user, etc.

Referring back to FIG. 6, each of the memory 620 and the storage device 660 may include at least one of a volatile storage medium and a non-volatile storage medium. For example, the memory 620 may include at least one of a read only memory (ROM) and a random access memory (RAM).

The security device 800 described above may be implemented as a desktop computer, a laptop, a personal portable communication terminal, a network computer, etc. In addition, the security device 600 may be referred to as a node, a server, a communication terminal, etc., located on a wired network, a short-range wireless communication network, a mobile communication network, a satellite network, or a combination of these networks.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the scope of the disclosure. Thus, it will be understood by those of ordinary skill in the art that various changes in form and details may be made without departing from the spirit and scope as defined by the following claims.

## Claims

1. A security method for client application programming interface (API) security that is performed by a security device including a service provider and a hash verification tool, the security method comprising:
registering, by the service provider, the API in the hash verification tool;
storing, by the hash verification tool, the API, an identifier (ID) of the API, and a hash; and
transmitting, by the hash verification tool, the ID and the hash to the service provider.

2. The security method of claim 1, further comprising performing, by the service provider, a security handshake for session generation with a user terminal.

3. The security method of claim 2, further comprising:
receiving, by the service provider, an API request from the user terminal; and
transmitting, by the service provider, the API to the user terminal according to the API request.

4. The security method of claim 3, further comprising receiving, by the hash verification tool, a verification request for the API from the user terminal.

5. The security method of claim 4, further comprising comparing, by the hash verification tool, the hash value of the API for which verification is requested with a hash value of a pre-stored API according to the verification request.

6. The security method of claim 5, further comprising transmitting, by the hash verification tool, a result of comparing the hash value of the API for which verification is requested with the hash value of the pre-stored API to the user terminal.

7. The security method of one of claims 3 to 6, further comprising regenerating, by the hash verification tool, a session through another security handshake with the user terminal when the security handshake expires.

8. A security method for client application programming interface (API) security that is performed by a hash verification tool of a security device including a service provider and a hash verification tool, the security method comprising:
receiving API registration from a service provider;
storing the API, an identifier (ID) of the API, and a hash according to the API registration;
transmitting the ID and the hash to the service provider;
receiving an API verification request from a user terminal after a security handshake between the hash verification tool and the user terminal is performed, the API for which verification is requested being one received by the user terminal from the service provider;
verifying the API; and
transmitting the API verification result to the user terminal.

9. The security method of claim 8, wherein the verifying of the API includes comparing the hash value of the API for which verification is requested with a hash value of an API pre-stored in the hash verification tool.

10. The security method of claim 8 or 9, further comprising performing another security handshake for session regeneration with the user terminal when the security handshake between the service provider and the user terminal expires.

11. A security device for client application programming interface (API) security, comprising:
a hash verification tool; and
a service provider that registers an API in the hash verification tool,
wherein the hash verification tool stores the API, an identifier (ID) of the API, and a hash and transmits the ID and the hash to the service provider.

12. The security device of claim 11, wherein the service provider performs a security handshake for session generation with a user terminal, and wherein the service provider receives an API request from the user terminal and transmits the API to the user terminal according to the API request.

13. The security device of claim 12, wherein the hash verification tool receives a verification request for an API from the user terminal.

14. The security device of claim 13, wherein the hash verification tool compares the hash value of the API for which verification is requested with a hash value of a pre-stored API according to the verification request, and wherein the hash verification tool transmits a result of comparing the hash value of the API for which verification is requested with the hash value of the pre-stored API to the user terminal.

15. The security device of one of claims 12 to 14, wherein the hash verification tool regenerates a session through another security handshake with the user terminal when the security handshake expires.
